# FASCICULE DE BREVET EUROPEEN

(11) **EP 1 972 517 B1**
(45) Date de publication et mention de la délivrance du brevet: **09.04.2014**
(21) Numéro de dépôt: 08101956.4
(22) Date de dépôt: 25.02.2008
(51) Int. Cl.: B60T 13/74, B60T 7/10

(54) **Procédé et système de commande d'un frein de stationnement automatique**
Verfahren und System zur Steuerung einer automatischen Feststellbremse
Method and system for controlling an automatic parking brake

(30) Priorité: 22.03.2007 FR 0702101
(43) Date de publication de la demande: 24.09.2008
(73) Titulaire: ROBERT BOSCH GMBH, 70442 Stuttgart (DE)
(72) Inventeur: Caruso, Corrado, 70121, BARI (IT); Tristano, Nicola, 75100, MATERA (IT)

(56) Documents cités:
- WO-A-92/21542
- DE-A1-102004 060 454
- DE-U1- 20 319 903
- FR-A- 2 871 207
- US-A1- 2004 188 189
- US-A1- 2005 167 212

## Description

L'invention concerne un procédé de fonctionnement d'un frein de véhicule et notamment un procédé permettant une libération (ou mise au repos) d'un système de freinage. L'invention est plus particulièrement applicable aux systèmes de freins de stationnement automatiques pour véhicules automobiles.

Un système de frein de stationnement automatique comporte généralement un moteur électrique de commande qui agit sur des dispositifs de freinage des roues d'un véhicule. La force communiquée par le moteur électrique est transmise aux dispositifs de freinage par une chaîne de transmission qui peut comporter un réducteur de vitesse, un système de transmission par vis sans fin et des câbles de transmission. Dans certains systèmes le frein de stationnement automatique agit sur les patins de frein d'un frein à disque.

La transmission des efforts du moteur vers les dispositifs de freinage se fait donc par une chaîne de transmission et il convient de s'assurer que, lors de la mise au repos du système, lorsque le système de frein de stationnement automatique commande le desserrage des dispositifs de freinage, la chaîne de transmission ne contribue pas à contrarier ce retour au repos.

Dans les systèmes à transmission par câbles agissant sur des freins à disques, il existe une certaine élasticité du système de transmission des forces. Le retour au repos des patins de frein se fait naturellement. En raison de l'élasticité du système de

Il est également connu selon le document WO 92/21542 de commander le desserrage du frein de stationnement en faisant fonctionner le moteur actionnant le câble du frein en sens inverse pour desserrer et relâcher le câble de frein et ensuite tirer de nouveau sur le câble de frein pour le retendre. Mais la succession des opérations envisagées dans ce procédé de commande de libération d'un frein de stationnement, ne définit pas clairement les différentes phases du desserrage et ne permet pas de remettre le frein au repos dans un état permettant un actionnement quasi-immédiat du frein lors de la commande suivante.

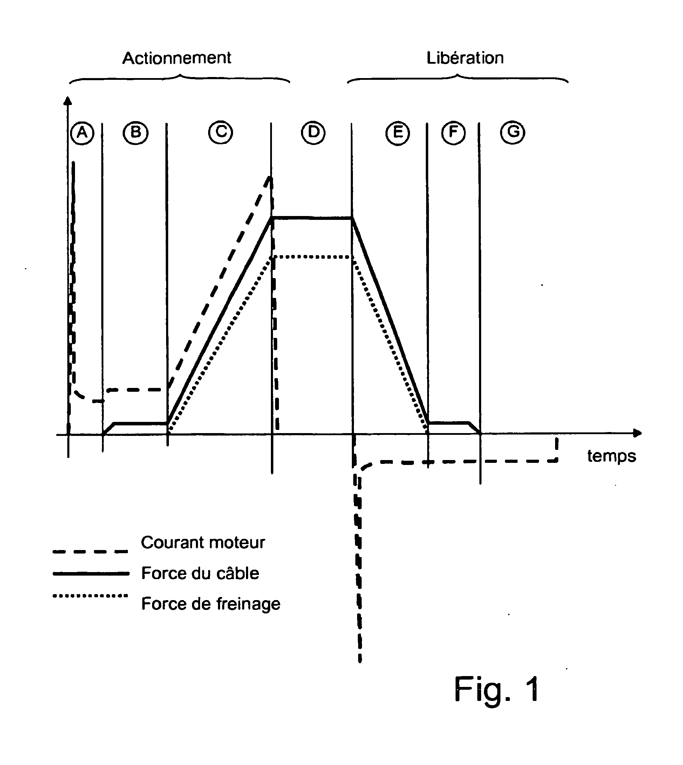

Par ailleurs, certains systèmes prévoient un relâchement supplémentaire des dispositifs de transmission (des câbles par exemple) pour s'assurer qu'il est parfaitement détendu. Cependant, une telle disposition allonge le temps de libération du système de frein de stationnement automatique et allonge son temps de fonctionnement lors de son utilisation suivante. Les courbes de la figure 1 illustrent les différentes phases de fonctionnement d'un tel système au cours d'un cycle comprenant un actionnement du système de frein de stationnement automatique suivi d'un cycle de relâchement (ou libération) du freinage.

En trait interrompu on a représenté la courbe du courant d'alimentation du moteur électrique de commande du système de frein de stationnement automatique. En trait continu, on a représenté la force exercée par le câble (ou les câbles) transmettant les forces de freinage du moteur vers les dispositifs de freinage (vers les patins de frein). En pointillés, on a représenté les forces de freinage exercées par les dispositifs de freinage.

Au cours d'une première phase A, le moteur est mis en fonctionnement selon un sens de rotation appelé sens de rotation direct (ou marche avant). Le câble de transmission des forces est tiré mais cette action n'a aucun effet sur le dispositif de freinage. La souplesse (ou le mou) dans le câble est supprimée. Le niveau du courant d'alimentation du moteur électrique de commande correspond à la résistance du système de transmission (du réducteur de vitesse par exemple). De manière connue, on a un pic du courant d'alimentation du moteur au démarrage de celui-ci.

Au cours d'une deuxième phase B, le câble est tendu, la force correspondant à la pré charge du ressort d'absorption n'est pas atteinte. Le dispositif de freinage commence légèrement à agir. Le jeu dans le dispositif de freinage est supprimé. En l'occurrence les patins de frein entrent en contact avec le disque de freinage. Mais aucune force de freinage n'est créée. Le niveau de courant d'alimentation du moteur électrique est faible et constant.

Au cours d'une troisième phase C, la force sur le câble augmente ainsi que la force de freinage. Le courant d'alimentation du moteur électrique augmente également en conséquence de l'effort exercé.

Au cours d'une quatrième phase D, la force de freinage désirée est atteinte. Le courant d'alimentation du moteur est coupé. La charge du câble de transmission et la force de freinage restent constantes en raison de l'irréversibilité de fonctionnement du système de transmission ou du verrouillage de celui-ci. Le cycle d'actionnement du système de frein de stationnement automatique est terminé. Le système reste dans cet état jusqu'à une intervention sur le système de frein de stationnement automatique pour que celui-ci commande une libération ou relâchement du freinage par exemple en vue du démarrage du véhicule.

Ce relâchement du frein commence au cours d'une cinquième phase E. Pour cela, le moteur électrique est mis en fonctionnement en sens inverse (marche arrière) de son sens de rotation direct utilisé lors de l'actionnement du frein de stationnement. On a donc un pic de courant inverse au pic de courant du démarrage précédent. La force de freinage et la charge du câble de transmission diminuent. Le niveau du courant d'alimentation nécessaire est faible et relativement constant en raison de l'énergie faible que nécessite ce relâchement du câble et le retour au repos du dispositif de freinage, d'autant que l'énergie dans le frein contribue au retour au repos du câble. Bien entendu, le courant nécessaire dans cette phase de fonctionnement dépend des caractéristiques du système de transmission de forces utilisé.

Au cours d'une sixième phase F, il n'y a, en principe, plus de force de freinage dans le dispositif de freinage. Cependant, on prévoit un dégagement supplémentaire du câble de transmission pour s'assurer d'un retour au repos de l'ensemble du système. On est à peu près sûrs qu'il n'y a plus de freinage dans le dispositif de freinage dû au système de frein automatique. Cependant, si la fin de la phase F ne peut pas être exactement détectée, on peut prévoir la phase suivante G.

A cours d'une septième phase G, on conserve donc l'alimentation du moteur un temps additionnel pour assurer la libération complète du frein. Cette phase doit être aussi courte que possible pour éviter de détendre le câble de transmission d'une trop grande quantité de façon à ne pas augmenter le temps de réaction du système de frein de stationnement automatique lors du fonctionnement suivant.

Théoriquement le moteur devrait être arrêté à la fin de la phase de fonctionnement F. La valeur du courant d'alimentation du moteur n'est pas utilisée pour déterminer la fin de la phase F. Par contre la détection de la force du câble peut être utilisée.

L'objet de l'invention concerne un procédé de commande du système de frein de stationnement automatique permettant d'éviter un relâchement du câble sans avoir à mesurer directement la force qui est exercée sur lui.

Dans un système de frein de stationnement automatique fournissant un fonctionnement efficace et confortable pour le conducteur, il convient que l'actionnement et la libération soient aussi rapides que possibles.

Quoi qu'il en soit, le temps de libération du système devrait être juste ce qui est nécessaire pour ramener la force de freinage à un niveau nul qui permette un déplacement du véhicule. Ce qui veut dire que le temps de la phase G correspondant au relâchement du câble de transmission est superflu et préjudiciable au confort du conducteur.

L'objet de l'invention est de résoudre ces inconvénients et d'utiliser ce temps pour effectuer le relâchement du câble sans avoir besoin de mesurer directement la force exercée par le câble.

L'invention concerne donc un procédé de commande d'un système de frein comprenant:
- un moteur électrique de commande,
- un système de transmission des forces de commande fournies par le moteur,
- au moins un dispositif de freinage des roues d'un véhicule, ce dispositif de freinage étant commandé par les forces de commande transmises par le dispositif de transmission et appliquant des forces de freinage aux roues du véhicule,
- un dispositif de blocage bloquant le fonctionnement du moteur et/ou du dispositif de transmission de forces.

Le procédé selon l'invention comporte une séquence de relâchement du système de frein et cette séquence de relâchement comprend les phases suivantes:
- phase E: mise en fonctionnement du moteur selon un sens de rotation inverse du sens de rotation direct utilisé pour l'actionnement du freinage,
- phase H: mise en fonctionnement du moteur selon ledit sens direct de rotation inverse du précédent,
- phase I, détection d'une valeur caractéristique du courant électrique d'alimentation du moteur,
- phase J, mise en fonctionnement du moteur selon un sens de rotation inverse dudit sens direct puis arrêt du moteur.

Selon une forme de réalisation préférée du procédé de l'invention, au début de la phase E, le dispositif de blocage débloque le système de transmission des forces de commande et/ou le moteur.

On pourra prévoir en outre entre les phases E et H les phases suivantes:
- une phase E de durée suffisante pour permettre un relâchement de la force de freinage appliquée par le dispositif de freinage,
- une phase F de durée suffisante au cours de laquelle le moteur est maintenu en fonctionnement dans le sens de rotation inverse pour permettre un relâchement de la tension dans le système de transmission des forces de commande.

De plus, le procédé de l'invention pourra prévoir entre les phases F et H, une phase de fonctionnement G supplémentaire au cours de laquelle le moteur est maintenu en fonctionnement dans le sens de rotation inverse pour permettre un relâchement complet du système de transmission des forces de commande.

Selon une forme de réalisation préférée du procédé de l'invention, la détection de ladite valeur caractéristique du courant électrique d'alimentation du moteur pourra se faire par la mesure de ce courant électrique et par la comparaison de la valeur mesurée à une valeur pré enregistrée.

Avantageusement, la détection de ladite valeur caractéristique du courant électrique d'alimentation du moteur se fait par détection d'une transition dans la variation dudit courant en fonction du temps.

Selon une variante de réalisation du procédé de l'invention, la détection de ladite valeur caractéristique du courant électrique d'alimentation du moteur se fait par la détection d'une transition de la variation du courant en fonction de la variation de la course de déplacement du système de transmission des forces de commande.

Avantageusement le système de freinage auquel s'applique le procédé ainsi décrit est un système de frein de stationnement automatique.

L'invention concerne également un système de freinage mettant en oeuvre le procédé ainsi décrit.

Les différents objets et caractéristiques de l'invention apparaîtront plus clairement dans la description qui va suivre et dans les figures annexées qui représentent:
- la figure 1, des courbes de fonctionnement d'un système de frein de stationnement automatique déjà décrites précédemment,
- la figure 2a, une représentation schématique d'un système de frein de stationnement automatique permettant de mettre en oeuvre le procédé de l'invention,
- la figure 2b, des courbes de fonctionnement d'un système de frein de stationnement automatique illustrant le procédé selon l'invention,
- la figure 3, un organigramme du procédé de fonctionnement selon l'invention.

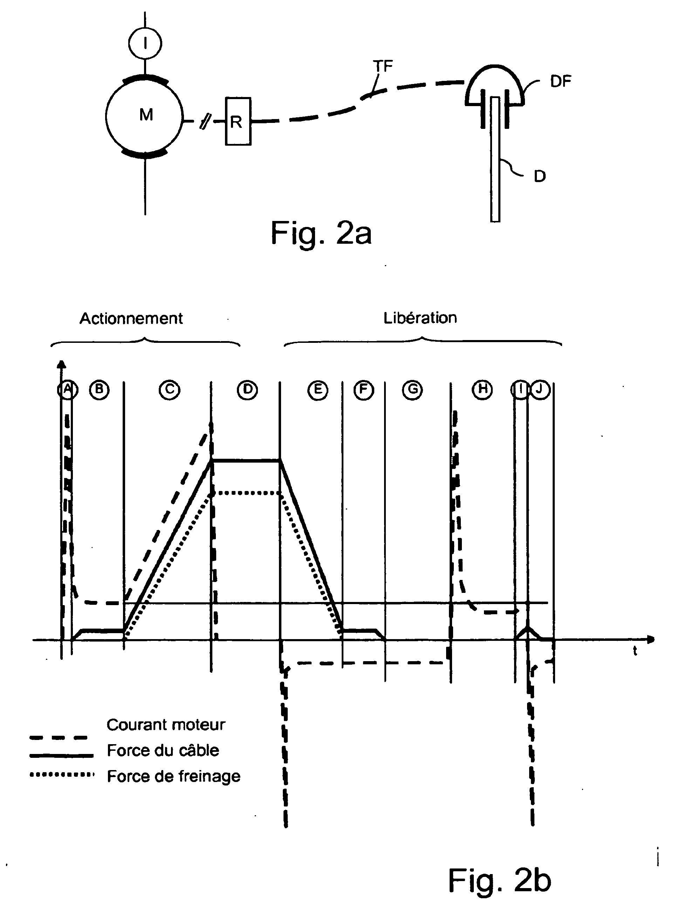

Le système de frein de stationnement automatique de la figure 2a comporte un moteur électrique de commande M capable de communiquer une force de freinage à un dispositif de freinage DF (patins de frein) capable de freiner la rotation d'un disque D qui est destiné à être associé à une roue d'un véhicule.

Le moteur M fournit une force de commande au dispositif de freinage DF avantageusement par l'intermédiaire d'un réducteur de vitesse R et d'un dispositif de transmission de force TF (câbles) qui peut être un câble de transmission de forces.

Un dispositif de blocage mécanique du système est associé au moteur M ou au réducteur de vitesse R pour bloquer la position du système. Ce dispositif de blocage est utilisé après actionnement du système de frein de stationnement automatique pour bloquer le système en position de freinage de stationnement et pour pouvoir couper l'alimentation du moteur électrique lorsque le véhicule est immobilisé.

Par ailleurs, pour pouvoir mettre en oeuvre le procédé de l'invention, un appareil de mesure de courant électrique I permet de mesurer le courant d'alimentation du moteur.

En se reportant à la figure 2b, on va maintenant décrire un exemple de réalisation du procédé de fonctionnement selon l'invention.

La figure 2b représente un cycle de fonctionnement (actionnement et libération) d'un frein de stationnement automatique selon l'invention.

Comme sur la figure 1, on a représenté, en trait interrompu, la courbe du courant d'alimentation du moteur électrique de commande du système de frein de stationnement automatique. En trait continu, on a représenté la force exercée par les câbles transmettant les forces de freinage du moteur vers les dispositifs de freinage (vers les patins de frein). En pointillés, on a représenté les forces de freinage exercées par les dispositifs de freinage.

L'actionnement du système de frein de stationnement est réalisé par les phases de fonctionnement A à D. A titre d'exemple, ces phases sont identiques aux phases A à D de la figure 1. Elles ne sont donc rappelées que brièvement:
- Au cours de la première phase A le moteur M est mis en fonctionnement selon un sens de rotation direct (en marche avant) et permet d'éliminer le mou du dispositif de transmission de forces TF (câbles) mais cette action n'a aucun effet sur le dispositif de freinage DF.
- Au cours de la deuxième phase B. Le dispositif de freinage commence légèrement à agir. Le jeu dans le dispositif de freinage est supprimé. En l'occurrence les patins de frein entrent en contact avec le disque de freinage. Mais aucune force de freinage n'est créée. Le niveau de courant d'alimentation du moteur électrique est faible et constant.

Au cours de la troisième phase C, la force de freinage agit et en augmentant, le courant d'alimentation du moteur électrique augmente également en conséquence.

Au cours de la quatrième phase D, la force de freinage désirée est atteinte. Le courant d'alimentation du moteur est coupé. La tension mécanique du câble de transmission et la force de freinage restent constantes en raison du verrouillage du système de frein de stationnement et de la réaction du frein. Le cycle d'actionnement du système de frein de stationnement automatique est terminé. Le système reste dans cet état jusqu'à une intervention sur le système de frein de stationnement automatique pour que celui-ci commande un relâchement du freinage.

On va maintenant décrire le fonctionnement de la libération du système de freinage selon l'invention. Selon l'exemple illustré par la figure 2b cette libération comporte 6 phases au lieu de 3 phases dans le système illustré par la figure 1.

Les phases E, F, G correspondent aux phases E, F, G de la figure 1.

Au cours de la cinquième phase E, l'ordre de libération du freinage a été donné. Le cycle de libération (ou relâchement) du système de frein automatique commence. Pour cela, le moteur électrique est mis en fonctionnement en sens de rotation inverse du sens de rotation direct utilisé pour l'actionnement du freinage (en marche arrière). On a donc un pic de courant inverse au pic de courant du démarrage précédent. Comme dans la figure 1, la force de freinage et la charge du câble de transmission diminuent. Le niveau du courant d'alimentation nécessaire est faible et relativement constant en raison de l'énergie faible que nécessite ce relâchement du câble et le retour au repos du dispositif de freinage. Le courant nécessaire dans cette phase de fonctionnement dépend des caractéristiques du système de transmission de forces utilisé.

Au cours de la sixième phase F le moteur est maintenu en fonctionnement (en marche arrière) pour permettre un dégagement supplémentaire du câble de transmission afin de s'assurer d'un retour au repos de l'ensemble du système. A l'issue de cette phase F, en principe, il n'y a plus de force de freinage dans le dispositif de freinage. Cependant, la fin de cette phase F ne peut pas être exactement détectée.

C'est pourquoi on prévoit avantageusement la septième phase G au cours de laquelle on conserve l'alimentation du moteur (en marche arrière) un temps additionnel pour assurer le relâchement complet du câble de transmission et la libération complète du frein.

De manière préférée, la phase G est plus courte que la phase G de la figure 1 dans la mesure où, comme on le décrit ci-après, le moment exact de relâchement est mesuré. Il peut être mémorisé pour les mises en oeuvres ultérieures du frein de stationnement selon l'invention.

Au cours d'une huitième phase H, le moteur est alimenté à nouveau dans le sens de rotation direct correspondant à l'actionnement du système de freinage (en marche avant) ce qui pourrait conduire à un actionnement du freinage. Cependant, le courant d'alimentation du moteur est maintenu faible après la crête de démarrage et les câbles de transmission ne transmettent encore aucune force.

Au cours d'une neuvième phase I dès que le mou des câbles est éliminé, la force des câbles a tendance à augmenter, ce qui va provoquer une augmentation du courant d'alimentation du moteur. Ce début d'augmentation de courant moteur est détecté.

Au cours d'une dixième phase J le sens de rotation du moteur est alors inversé (en marche arrière) pendant un temps très court pour permettre de détendre à nouveau le câble. Le moteur est alors ensuite arrêté.

Les trois phases H, I et J n'affectent pas les manoeuvres de conducteur et ne sont pas non plus affectées par une quelconque manoeuvre du conducteur telle que par la manoeuvre du frein de service.

Le fait de tirer juste sur le câble pour le retendre n'influence pas le comportement du frein de service. Notamment, dans le cas où le câble de transmission est muni d'un ressort d'absorption, cette légère traction sur le câble pourra atteindre la pré charge du ressort sans que cela ait une influence sur le dispositif de freinage.

L'avantage de ce procédé est de mettre le système de frein de stationnement, lors de sa mise au repos, dans un état qui permettra son actionnement quasi immédiat lors de la commande suivante. Un tel procédé permet donc d'améliorer le confort du conducteur.

L'objet de l'invention concerne donc un procédé permettant de s'assurer que, lorsque le système de frein de stationnement automatique commande le relâchement du freinage de stationnement, le système de transmission des forces de commande du moteur vers les dispositifs de freinage ne conserve pas une force résiduelle qui contrarie le retour au repos des dispositifs de freinage. Egalement, le procédé de l'invention permet de s'assurer que le système de transmission de forces de commande ne se relâche pas d'une trop grande quantité pour que l'actionnement suivant du système de frein de stationnement soit efficace le plus rapidement possible.

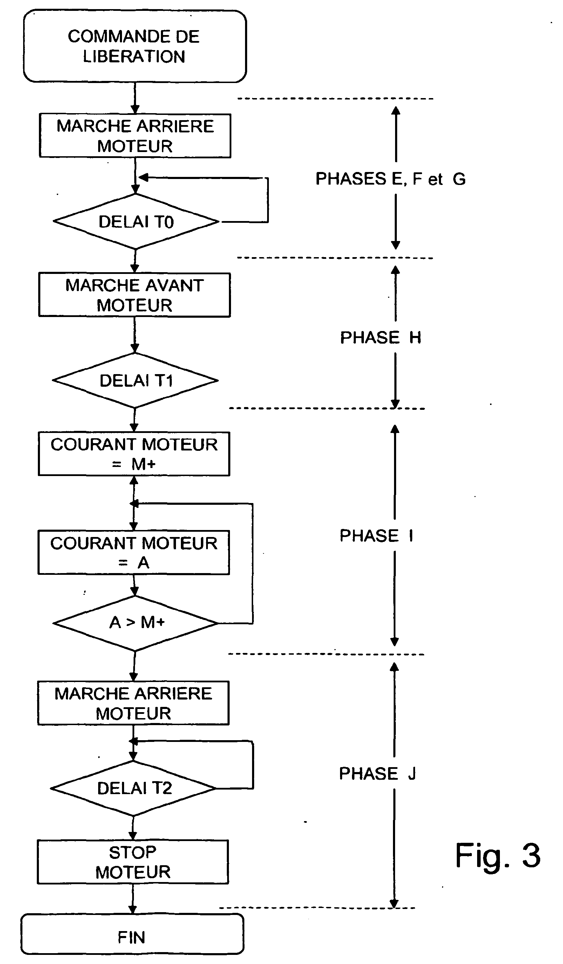

La figure 3 représente un organigramme de fonctionnement du procédé selon l'invention. Il ne représente que les phases E à J des courbes de la figure 2b correspondant à la libération du système de frein de stationnement.

Lorsque le conducteur commande la libération du frein de stationnement, le moteur électrique du système de frein de stationnement est mis en marche arrière pendant un temps T0 correspondant aux phases E, F et G.

Ensuite, le moteur électrique est mis en marche avant pendant un temps T1, ce qui correspond à la phase H.

Durant la phase I, le courant d'alimentation A absorbé par le moteur électrique est mesuré et est comparé à une valeur préenregistrée M+. Lorsque la valeur A devient supérieure à la valeur M+, la phase J est déclenchée. Le moteur est mis en marche arrière pendant un temps très court déterminé de préférence sensiblement égal ou légèrement supérieur à la durée de la phase I. Puis le moteur est arrêté. Le système de frein de stationnement est remis au repos.

L'invention concerne donc un procédé utilisant principalement la valeur de l'intensité du courant d'alimentation absorbé par le moteur électrique. Selon ce procédé on peut s'assurer qu'un mou déterminé minimum est laissé sur les câbles de transmission des forces de commande après l'arrêt du système.

Le procédé selon l'invention est donc basé sur la possibilité de détecter le courant d'alimentation du moteur pour détecter l'instant exact où le dispositif de freinage commence à être efficace une fois tiré par le système de transmission de forces de commande, par les câbles de traction par exemple.

Dans le cas d'utilisation d'un ressort de pré chargé, un niveau de force minimal est nécessaire pour commencer à actionner les dispositif de freinage. Une transition de force nécessaire est perceptible dans le câble de transmission ainsi qu'au niveau du moteur. Cette phase de fonctionnement est détectée par la détection du courant d'alimentation du moteur. Dès que cela est détecté, le fonctionnement du moteur est inversé durant un temps bref, puis il est arrêté. Le système de frein de stationnement est ainsi remis dans un état prêt à fonctionner avec le système de transmission de forces (câble) ne présentant que peu ou pas de mou. A l'actionnement suivant, le système de frein de stationnement sera donc efficace quasi immédiatement, ce qui sera plus sécurisant et confortable pour le conducteur.

Avantageusement, le système selon l'invention, pour la mise en oeuvre du procédé selon la présente invention, comporte un calculateur de type connu couramment utilisé dans l'industrie automobile.

Avantageusement, le calculateur comporte un micro contrôleur muni d'une mémoire permanente de stockage de programme, notamment de mise en oeuvre selon la présente invention de type ROM, PROM, EPROM, EEPROM, et/ou EEPROM flash.

Avantageusement, le calculateur est relié à un bus de données par exemple le bus commercialisé sous la dénomination « CAN ».

Le calculateur comporte des entrées d'acquisition des données, notamment de tensions électriques (ou de leurs valeurs numérisées) et une sortie de commande d'actionnement de frein.

Il est bien entendu que la mise en oeuvre du procédé décrit pour la commande de freins à tambour et/ou pour l'application directe de forces aux garnitures de frein, sans passer par un câble (motor ou caliper en terminologie anglo-saxonne) ne sort pas du cadre de l'invention.

## Revendications

1. Procédé de commande d'un système de freinage pour véhicule comprenant :
- un moteur électrique (M) de commande,
- un système de transmission des forces de commande (TF) fournies par le moteur,
- au moins un dispositif de freinage (DF) des roues d'un véhicule commandé par les forces de commande transmises par le dispositif de transmission et appliquant des forces de freinage aux roues du véhicule,
- un dispositif de blocage bloquant le fonctionnement du dispositif de transmission de forces et/ou du moteur,
- une séquence de relâchement du système de freinage comprenant la phase E : mise en fonctionnement du moteur en sens de rotation inverse utilisé pour l'actionnement du freinage,
**caractérisé en ce que**
la séquence de relâchement du système de freinage comporte en outre les phases suivantes :
- une phase F de durée suffisante au cours de laquelle le moteur est maintenu en fonctionnement dans le sens de rotation inverse pour permettre un relâchement de la tension dans le système de transmission des forces de commande ;
- une phase de fonctionnement G au cours de laquelle le moteur est maintenu en fonctionnement dans le sens de rotation inverse pour permettre un relâchement complet du système de transmission des forces de commande ;
- phase H : mise en fonctionnement du moteur selon ledit sens de rotation inverse du précédent, le courant d'alimentation étant maintenu faible après la crête de démarrage pour tirer juste sur le câble et le retendre, le câble de transmission ne transmettant encore aucune force ;
- phase I, détection du début d'augmentation du courant électrique d'alimentation du moteur ;
- phase J, mise en fonctionnement du moteur en sens de rotation inverse du sens direct pendant un temps très court pour permettre de détendre à nouveau le câble, puis arrêt du moteur.

2. Procédé selon la revendication 1,
**caractérisé en ce qu'**
au début de la phase E, le dispositif de blocage débloque le système de transmission des forces de commande et/ou le moteur.

3. Procédé selon la revendication 1,
**caractérisé en ce que**
la détection de ladite valeur caractéristique du courant électrique d'alimentation du moteur se fait par la mesure de ce courant et par la comparaison de la valeur mesurée à une valeur pré enregistrée.

4. Procédé selon la revendication 1,
**caractérisé en ce que**
la détection de ladite valeur caractéristique du courant électrique d'alimentation du moteur se fait par détection d'une transition dans la variation dudit courant en fonction du temps.

5. Procédé selon la revendication 1,
**caractérisé en ce que**
ladite valeur caractéristique du courant électrique d'alimentation du moteur se fait par la détection d'une transition de la variation du courant en fonction de la variation de la course de déplacement du système de transmission des forces de commande.

6. Procédé selon l'une quelconque des revendications précédentes, **caractérisé en ce que**
le système de freinage est un système de frein de stationnement automatique.

7. Système de freinage mettant en oeuvre le procédé selon l'une quelconque des revendications précédentes.

## Patentansprüche

1. Verfahren zum Steuern eines Bremssystems für ein Fahrzeug, das Folgendes umfasst:
- einen Steuer-Elektromotor (M),
- ein System (TF) zum Übertragen von Steuerkräften, die von dem Motor geliefert werden,
- wenigstens eine Bremsvorrichtung (DF) für die Räder eines Fahrzeugs, die durch die von der Übertragungsvorrichtung übertragenen Steuerkräfte gesteuert wird und an die Räder des Fahrzeugs Bremskräfte anlegt, und
- eine Sperrvorrichtung, um den Betrieb der Kraftübertragungsvorrichtung und/oder des Motors zu sperren,
- wobei eine Entlastungsfolge für das Bremssystem die folgende Phase E umfasst: Betreiben des Motors in entgegengesetzter Drehrichtung, die für die Betätigung der Bremse verwendet wird,
**dadurch gekennzeichnet, dass**
die Entlastungsfolge für das Bremssystem außerdem die folgenden Phasen umfasst:
- eine Phase F mit ausreichender Dauer, in deren Verlauf der Motor in der entgegengesetzten Drehrichtung in Betrieb gehalten wird, um eine Entlastung der Spannung in dem Steuerkraft-Übertragungssystem zu ermöglichen;
- eine Betriebsphase G, in deren Verlauf der Motor in der entgegengesetzten Drehrichtung in Betrieb gehalten wird, um eine vollständige Entlastung des Steuerkraft-Übertragungssystems zu ermöglichen;
- eine Phase H: Betreiben des Motors in der zu der vorhergehenden entgegengesetzten Drehrichtung, wobei der Versorgungsstrom nach der Startspitze niedrig gehalten wird, um an dem Seil nur so stark zu ziehen, dass es nachgespannt wird, wobei das Übertragungsseil keinerlei Kraft mehr überträgt;
- eine Phase I: Detektieren des Beginns der Erhöhung des elektrischen Versorgungsstroms des Motors;
- eine Phase J: Betreiben des Motors in der zu der direkten Richtung entgegengesetzten Drehrichtung während einer sehr kurzen Zeit, um zu ermöglichen, das Seil erneut zu entspannen, dann Anhalten des Motors.

2. Verfahren nach Anspruch 1,
**dadurch gekennzeichnet, dass**
am Beginn der Phase E die Sperrvorrichtung das Steuerkraft-Übertragungssystem und/oder den Motor entsperrt.

3. Verfahren nach Anspruch 1,
**dadurch gekennzeichnet, dass**
die Detektion des charakteristischen Werts des elektrischen Versorgungsstroms des Motors durch Messen dieses Stroms und durch Vergleichen des gemessenen Werts mit einem im Voraus aufgezeichneten Wert erfolgt.

4. Verfahren nach Anspruch 1,
**dadurch gekennzeichnet, dass**
die Detektion des charakteristischen Werts des elektrischen Versorgungsstroms des Motors durch Detektion eines Übergangs bei der Veränderung des Stroms als Funktion der Zeit erfolgt.

5. Verfahren nach Anspruch 1,
**dadurch gekennzeichnet, dass**
die Detektion des charakteristischen Werts des elektrischen Versorgungsstroms des Motors durch Detektion eines Übergangs der Veränderung des Stroms als Funktion der Veränderung der Verlagerungsbahn des Steuerkraft-Übertragungssystems erfolgt.

6. Verfahren nach einem der vorhergehenden Ansprüche, **dadurch gekennzeichnet, dass**
das Bremssystem ein automatisches Parkbremssystem ist.

7. Bremssystem, das das Verfahren nach einem der vorhergehenden Ansprüche ausführt.

## Claims

1. Method of controlling a vehicle braking system comprising:
- an electric control motor (M),
- a system for transmitting the control forces (TF) provided by the motor,
- at least one braking device (DF) for the wheels of a vehicle controlled by the control forces transmitted by the transmission device and applying braking forces to the wheels of the vehicle,
- a locking device locking the operation of the force transmission device and/or the motor,
- a sequence for releasing the braking system comprising the phase E: operating the motor in the opposite direction of rotation used for the actuation of braking,
**characterized in that** the sequence for releasing the braking system furthermore comprises the following phases:
- a phase F of sufficient duration in the course of which the motor is kept operating in the opposite direction of rotation so as to allow a release of the tension in the control force transmission system;
- an operating phase G in the course of which the motor is kept operating in the opposite direction of rotation so as to allow complete release of the control force transmission system;
- phase H: operating the motor in the said opposite direction of rotation to the previous direction, the supply current being kept small after the starting spike in order to pull precisely on the cable to retension it, the transmission cables still not transmitting any force;
- phase I, detecting the commencement of an increase in the electric current powering the motor,
- phase J, operating the motor in the opposite direction of rotation to the forward direction for a very short time so as to allow the cable to be untensioned again, then stopping the motor.

2. Method according to Claim 1, **characterized in that** at the commencement of phase E, the locking device unlocks the system for transmitting the control forces and/or the motor.

3. Method according to Claim 1, **characterized in that** the detection of said value characteristic of the electric current powering the motor is done by measuring this current and by comparing the measured value with a prerecorded value.

4. Method according to Claim 1, **characterized in that** the detection of said value characteristic of the electric current powering the motor is done by detecting a transition in the variation of said current as a function of time.

5. Method according to Claim 1, **characterized in that** of said value characteristic of the electric current powering the motor is done by detecting a transition of the variation of the current as a function of the variation of the displacement travel of the control force transmission system.

6. Method according to any one of the preceding claims, **characterized in that** the braking system is an automatic parking brake system.

7. Braking system implementing the method according to any one of the preceding claims.
